# EUROPEAN PATENT APPLICATION

(11) **EP 4 742 142 A1**
(43) Date of publication of application: **13.05.2026**
(21) Application number: 24836303.8
(22) Date of filing: 02.07.2024
(51) Int. Cl.: G06Q 50/26, G06Q 40/10, G07F 17/40, G06Q 20/20, G06V 30/41, G06Q 20/10, G06V 40/16, G06K 19/06

(54) **FOREIGNER DEPARTURE SYSTEM INCLUDING TAX REFUNDING AND METHOD THEREOF**

(30) Priority: 03.07.2023 KR 20230086056; 03.07.2023 KR 20230086057
(71) Applicant: Lordsystem Co., Ltd., Seoul 05542 (KR)
(72) Inventor: JANG, Yang Ho, Yeoncheon-gun, Gyeonggi-do 11020 (KR)
(74) Representative: Rau, Schneck & Hübner Patentanwälte Rechtsanwälte PartGmbB
(86) International application number: PCT/KR2024/009322
(87) International publication number: WO 2025/009855

(57) **Abstract**

The present invention relates to a foreigner departure system including tax refunding and a method thereof and, more specifically, to a foreigner departure system including tax refunding and a method thereof, wherein a tax refund procedure is performed in kiosk terminals provided on the land side and the air side of an airport, respectively, thus making it possible to reduce the time or manpower required for the scan input of an export confirmation receipt. The foreigner departure system including tax refunding according to one embodiment of the present invention comprises: a first kiosk terminal that is installed on the land side of an airport and authenticates a passport, and that scans a refund statement receipt of a foreign tourist to perform a tax refund procedure for purchased products; a second kiosk terminal that is installed on the air side of the airport and authenticates the passport, and that outputs tax refund information according to the result of the tax refund procedure; an operation server which receives passport information or the refund statement receipt from the first and second kiosk terminals and requests a confirmation of the departure of the foreign tourist or export of the purchased products while transmitting the passport information or refund statement receipt to an agency server, transmits the confirmation result to the first and second kiosk terminals, requests tax refund information while transmitting the confirmation result to a refund business server, and transmits the result of the request to the first and second kiosk terminals; an institution server that confirms the departure of the foreign tourist or export of the purchased products; and the refund business server that confirms the tax refund information and sends the refunded amount to an account of the foreign tourist.

## Description

### Technical Field

The present invention relates to a foreigner departure system including a tax refund and a method thereof, and more specifically, to a foreigner departure system including a tax refund and a method thereof, in which kiosk terminals are provided on a land side and an air side of an airport, respectively, to allow the kiosk terminals to perform a tax refund procedure, thereby reducing a time or manpower required for a scan input of an export confirmation receipt.

### Background Art

Recently, as international exchanges have become more active and foreign travel has become more common, shopping has become more common in foreign department stores and airport terminals.

When shopping in a foreign country, that is, when a Korean purchases goods in a foreign country or when a foreigner comes to Korea to buy goods, a certain portion of the tax imposed on the goods may be refunded again.

When foreign tourists go shopping in Korea, foreigners are not obligated to pay taxes, so that the foreigners receive a refund of certain taxes, such as value-added taxes included in the price of goods.

In addition to duty-free stores, which are tax-free stores, foreign tourists who purchase goods at stores designated by the National Tax Service, such as department stores, which are tax refund stores, may receive tax refunds before the departure at a value-added tax refund counter in a bonded area after completing a departure procedure at the airport upon the departure.

In a conventional refund procedure for foreign tourists, when a foreign tourist purchases goods of a certain amount or more at a domestic tax refund store, a refund statement (goods purchase confirmation form) is issued along with the purchased goods, and within 3 months from the date of purchasing the goods, the foreign tourist presents the purchased goods to a customs employee upon the departure to confirm the export of the refund statement, and presents the refund statement at the refund counter in the duty-free area of the departure hall to receive the refund.

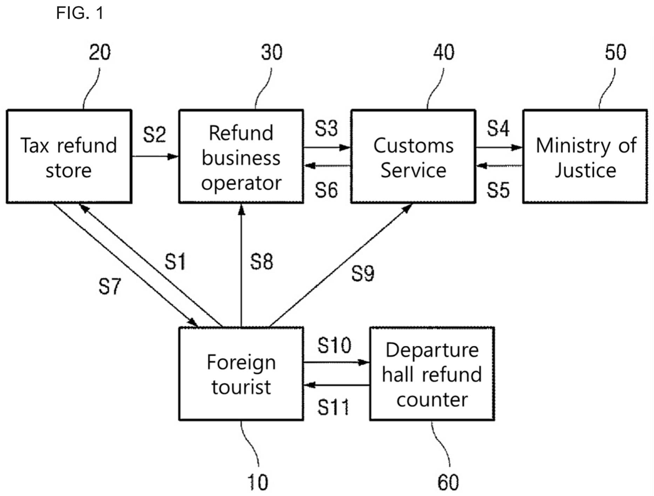

Specifically describing the refund procedure with reference to FIG. 1, first, when a foreign tourist 10 purchases goods of a certain amount or more at a domestic tax refund store 20 (S1), the tax refund store 20 requests a tax refund from a refund business operator 30 (S2), the refund business operator 30 registers the tax refund with a Customs Service 40 (S3), and the Customs Service 40 requests a Ministry of Justice 50 to confirm entry of the foreign tourist 10 who has purchased the goods (S4).

Accordingly, the Ministry of Justice 50 confirms the entry of the foreign tourist 10 and notifies the Customs Service 40 of a result of the confirmation (S5), and when the entry is confirmed, the Customs Service 40 registers the tax refund and notifies the refund business operator 30 of a result of the registration, and the refund business operator 30 transmits the result of the registration to the tax refund store 20 (S6).

Next, the tax refund store 20 provides a receipt for refund (refund statement) to the foreign tourist 10 (S7).

Thereafter, the foreign tourist 10 registers the refund statement with the refund business operator 30 upon departure (S8), presents an export confirmation receipt to the Customs Service 40 (S9), and when the foreign tourist 10 requests a refund to a departure hall refund counter 60 after completing the departure procedure (S10), a refund amount is paid to an account of the foreign tourist 10 at the departure hall refund counter 60 (S11).

However, in the conventional refund procedure as described above, since the customs employee has to scan a barcode or a QR code included in the export confirmation receipt one by one in step S9 of presenting the export confirmation receipt upon departure, it takes a lot of time and manpower to input the scan, and in a time period when large numbers of foreign tourists gather simultaneously, a sharp increase in waiting time may result in abandonment of tax refunds, fraudulent refund claims by the employee using a rejected refund receipt, or delays in aircraft departure.

### Disclosure

### Technical Problem

The present invention has been made in an effort to solve the above problems, and an object of the present invention is to provide a foreigner departure system including a tax refund and a method thereof, in which kiosk terminals are provided on a land side and an air side of an airport, respectively, to allow the kiosk terminals to perform a tax refund procedure, thereby reducing a time or manpower required for a scan input of an export confirmation receipt, and even in a time period when large numbers of foreign tourists gather simultaneously, it is possible to prevent abandonment of a tax refund by reducing a waiting time, and prevent in advance fraudulent refund claims by an employee using a rejected refund receipt or a delay in aircraft departure.

In addition, another object of the present invention is to provide a foreigner departure system including a tax refund and a method thereof, in which mutually different tax refund procedures are performed by mobile terminals equipped with mobile passports in a land side and an air side of an airport, respectively, so that the tax refund procedures may be simplified, thereby reducing a time or manpower required for the tax refund procedures, and even in a time period when large numbers of foreign tourists gather simultaneously, it is possible to prevent abandonment of a tax refund by reducing a waiting time, and prevent in advance fraudulent refund claims by an employee using a rejected refund receipt or a delay in aircraft departure.

### Technical Solution

To achieve the above objects, a foreigner departure system including a tax refund according to one embodiment of the present invention includes: a first kiosk terminal installed on a land side of an airport to authenticate a passport, and configured to scan a refund statement receipt of a foreign tourist to perform a tax refund procedure for purchased goods; a second kiosk terminal installed on an air side of the airport to authenticate the passport, and configured to output tax refund information according to a result of the tax refund procedure; an operation server configured to receive passport information or the refund statement receipt from the first and second kiosk terminals to request confirmation of departure of the foreign tourist or export of the purchased goods while transmitting the passport information or refund statement receipt to an institution server, transmit a result of the confirmation to the first and second kiosk terminals, request the tax refund information while transmitting the passport information or the refund statement receipt to a refund business operator server, and transmit a result of the request to the first and second kiosk terminals; the institution server configured to confirm the departure of the foreign tourist or the export of the purchased goods in response to the request of the operation server, and transmit a result of the confirmation to the operation server; and the refund business operator server configured to confirm the tax refund information in response to the request of the operation server to transmit the tax refund information to the operation server, and pay a refund amount to an account of the foreign tourist when the departure of the foreign tourist is confirmed.

To achieve the above objects, a foreigner departure system including a tax refund according to another embodiment of the present invention includes: a mobile terminal held by a foreign tourist, in which the mobile terminal has a mobile passport embedded therein, executes a refund and authentication application ("refund application") to perform a tax refund procedure for purchased goods in association with the mobile passport when the mobile terminal is located on a land side of an airport, and executes the refund application to output tax refund information according to a result of the tax refund procedure when the mobile terminal is located on an air side; an operation server configured to receive mobile passport information from the mobile terminal to request confirmation of departure of the foreign tourist or export of the purchased goods in association with the mobile passport while transmitting the mobile passport information to an institution server, transmit a result of the confirmation to the mobile terminal, request the tax refund information while transmitting the passport information or the refund statement receipt to a refund business operator server, and transmit a result of the request to the mobile terminal; the institution server configured to confirm the departure of the foreign tourist or the export of the purchased goods in association with the mobile passport in response to the request of the operation server, and transmit a result of the confirmation to the operation server; and the refund business operator server configured to confirm the tax refund information in response to the request of the operation server to transmit the tax refund information to the operation server, and pay a refund amount to an account of the foreign tourist when the departure of the foreign tourist is confirmed.

A foreigner departure method including a tax refund according to one embodiment of the present invention includes: (A) starting a tax refund procedure for purchased goods of a foreign tourist by using a first kiosk terminal installed on a land side of an airport upon departure of the foreign tourist; (B) confirming a passport (including a mobile passport) of the foreign tourist and scanning a barcode or a QR code included in a refund statement receipt, by the first kiosk terminal; (C) when information about the passport and a refund statement (receipt) is transmitted from the first kiosk terminal to the operation server, transmitting the information to a refund business operator server to request confirmation of the tax refund for the purchased goods, and transmitting the information to an institution server to request confirmation of export of the purchased goods, by the operation server; (D) transmitting a result of the confirmation for the export of the purchased goods, which is transmitted by the institution server, and a tax refund list for the purchased goods, which is transmitted by the refund business operator server, to the first kiosk terminal, by the operation server; (E) displaying the tax refund list on a display unit when the export of the purchased goods is confirmed by the first kiosk terminal; (F) confirming the passport of the foreign tourist by using a second kiosk terminal installed on an air side of the airport after the foreign tourist passes through a departure hall; (G) when the passport information is transmitted from the second kiosk terminal to the operation server, transmitting the passport information from the operation server to the refund business operator server to request the tax refund for the purchased goods, and transmitting the passport information to the institution server to request confirmation of the departure of the foreign tourist; (H) transmitting a result of the confirmation of the departure of the foreign tourist, which is transmitted by the institution server, and the tax refund information about the purchased goods, which is transmitted by the refund business operator server, from the operation server to the second kiosk terminal; (I) displaying the tax refund information on a display unit by the second kiosk terminal; and (J) when the departure of the foreign tourist is confirmed, transmitting the confirmation of the departure from the operation server to the refund business operator server, and paying a refund amount to an account of the foreign tourist by the refund business operator server.

A foreigner departure method including a tax refund according to one embodiment of the present invention includes: (A') transmitting mobile passport information to an operation server by executing a refund and authentication application (refund application) of a mobile terminal having a mobile passport embedded therein when the foreign tourist enters a land side of an airport for departure; (B') transmitting the mobile passport information to a refund business operator server to request confirmation of the tax refund for purchased goods in association with the mobile passport, and transmitting the mobile passport information to an institution server to request confirmation of export of the purchased goods, by the operation server; (C') transmitting a result of the confirmation for the export of the purchased goods in association with the mobile passport, which is transmitted by the institution server, and a tax refund list for the purchased goods in association with the mobile passport, which is transmitted by the refund business operator server, to the mobile terminal, by the operation server; (D') displaying the tax refund list on a screen when the export of the purchased goods in association with the mobile passport is confirmed, by the mobile terminal; (E') transmitting the mobile passport information to the operation server by executing the refund application of the mobile terminal having the mobile passport embedded therein when the foreign tourist enters an air side of the airport after passing through a departure hall; (F') transmitting the mobile passport information to the refund business operator server to request the tax refund for the purchased goods in association with the mobile passport, and transmitting the mobile passport information to the institution server to request confirmation of departure of the foreign tourist, by the operation server; (G') transmitting a result of the confirmation of the departure of the foreign tourist, which is transmitted by the institution server, and tax refund information about the purchased goods in association with the mobile passport, which is transmitted by the refund business operator server, to the mobile terminal, by the operation server; (H') displaying the tax refund information on the screen by the mobile terminal; and (I') when the departure of the foreign tourist is confirmed, transmitting the confirmation of the departure from the operation server to the refund business operator server, and paying a refund amount to an account of the foreign tourist by the refund business operator server.

### Advantageous Effects

According to the technical solution described above, the kiosk terminals may be provided on the land side and the air side of the airport, respectively, to allow the kiosk terminals to perform a tax refund procedure, thereby reducing a time or manpower required for a scan input of an export confirmation receipt, and even in a time period when large numbers of foreign tourists gather simultaneously, it is possible to prevent abandonment of a tax refund by reducing a waiting time, and prevent in advance fraudulent refund claims by an employee using a rejected refund receipt or a delay in aircraft departure.

In addition, mutually different tax refund procedures may be performed by mobile terminals equipped with mobile passports in a land side and an air side of an airport, respectively, so that the tax refund procedures may be simplified, thereby reducing a time or manpower required for the tax refund procedures, and even in a time period when large numbers of foreign tourists gather simultaneously, it is possible to prevent abandonment of a tax refund by reducing a waiting time, and prevent in advance fraudulent refund claims by an employee using a rejected refund receipt or a delay in aircraft departure.

### Description of Drawings

FIG. 1 is a diagram showing a conventional tax refund procedure of a foreign tourist.
FIG. 2 is a block diagram of a foreigner departure system including a tax refund according to one embodiment of the present invention.
FIG. 3 is an internal configuration diagram of a kiosk terminal shown in FIG. 2.
FIG. 4 is a block diagram of a foreigner departure system including a tax refund according to another embodiment of the present invention.
FIG. 5 is a flowchart of a foreigner departure method including a tax refund according to one embodiment of the present invention.
FIG. 6 is a flowchart of a foreigner departure method including a tax refund according to another embodiment of the present invention.

### [Mode for Invention]

Hereinafter, configurations and operations of embodiments of the present invention will be described with reference to the accompanying drawings.

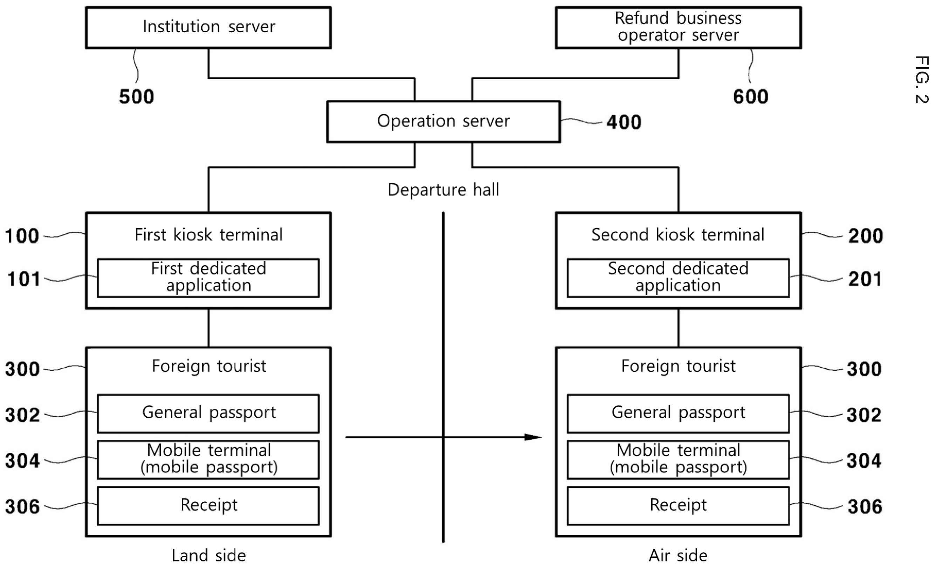

FIG. 2 is a block diagram of a foreigner departure system including a tax refund according to one embodiment of the present invention.

As shown in FIG. 2, the foreigner departure system including a tax refund according to one embodiment of the present invention includes kiosk terminals 100 and 200, an operation server 400, an institution server 500, a refund business operator server 600, and a mobile terminal 304, and a foreign tourist 300 performs a tax refund procedure through the components.

A communication method between the components may include all communication methods in which objects may be networked through wired and/or wireless networks, and is not limited to wired communication, wireless communication, 3G, 4G, or other methods.

Herein, the "foreigner" means a person who holds the nationality of a country other than the country of stay and is not liable for taxes therein, a foreign tourist is given as a representative example, but the foreigner is not limited to such a case.

The foreign tourist 300 has a general passport 302 or the mobile terminal 304 having a mobile passport embedded therein, and a receipt (refund statement) for a refund received after purchasing goods.

In this case, the mobile terminal 304 is implemented in the form of a smartphone, and may be any computing device that may be carried and used, such as another mobile communication terminal having a mobile passport embedded therein, a notebook computer, a personal digital assistant (PDA), a tablet computer, or the like.

The kiosk terminals 100 and 200 are installed on a land side and an air side of an airport, respectively, so that the foreign tourist may perform the tax refund procedure, and dedicated applications 101 and 201 are installed for this purpose.

Herein, the air side (A/S) refers to a zone including a runway, a landing zone, a taxiway, a parking ramp, and the like directly required for takeoff and landing of an aircraft among airport facilities, and the land side (L/S) refers to a zone including passenger and cargo handling facilities, other auxiliary facilities, parking lots, and the like.

When the foreign tourist enters the air side through a departure gate, which is a boundary line of the land side, the foreign tourist may not return to the land side unless there are special circumstances.

The kiosk terminals 100 and 200 are devices for implementing the tax refund procedure for foreign tourists, and are installed on the land side and the air side, which are specific places in the airport, to recognize a receipt of the foreign tourist and request the departure system to export the purchased goods.

That is, the foreign tourist 300 performs the tax refund procedure through the first kiosk terminal 100 of the land side, and leaves the country through the departure gate to enter the air side and receive a tax refund through the second kiosk terminal 200 of the air side.

As described above, the first kiosk terminal 100 and the second kiosk terminal 200 are installed in mutually different zones (land side and air side) while being separated from each other so as to perform mutually different procedures for the tax refund, and to this end, a first dedicated application 101 of the first kiosk terminal 100 and a second dedicated application 201 of the second kiosk terminal 200 perform mutually different roles (functions).

When the foreign tourist 300 executes the first dedicated application 101 of the first kiosk terminal 100 of the land side, the first kiosk terminal 100 first confirms a passport (including a mobile passport) and compares a photograph on the passport with a photograph directly captured of a passport holder so as to determine whether a person in the photograph on the passport is the same as the passport holder.

In this case, the first kiosk terminal 100 may include a camera 140 for determining whether the person in the photograph on the passport is the same as the passport holder, capture an image while instructing the foreign tourist to take a specific pose or facial expression, and use the captured image (mission photograph).

For example, the first kiosk terminal 100 may instruct the foreign tourist to pose with the left hand placed against the face and making a V-sign with the fingers, and to capture the mission photograph with a smiling face, so that the first kiosk terminal 100 may determine whether the mission photograph corresponds to a photograph of the instructed pose, and determine whether a person in the mission photograph is the same as the passport holder.

In addition, an age group is identified by analyzing a face of the mission photograph that is directly captured, or an age group is identified based on the date of birth recorded in the passport 302 to provide a screen suitable for the age group.

For example, when the age group is the elderly, a screen having relatively larger letters and images than a screen provided to the general public and the youth may be provided.

In addition, the first kiosk terminal 100 scans a barcode or a QR code included in a refund statement receipt 306 of the foreign tourist 300 to transmit information included in the barcode or the QR code to the operation server 400, and receives a tax refund list transmitted from the operation server 400 to display the tax refund list on a display unit 120.

The foreign tourist 300 confirms that there is no abnormality in the tax refund list displayed on the display unit 120 of the first kiosk terminal 100, and when there is no abnormality, the foreign tourist 300 completes the tax refund procedure in the first kiosk terminal 100.

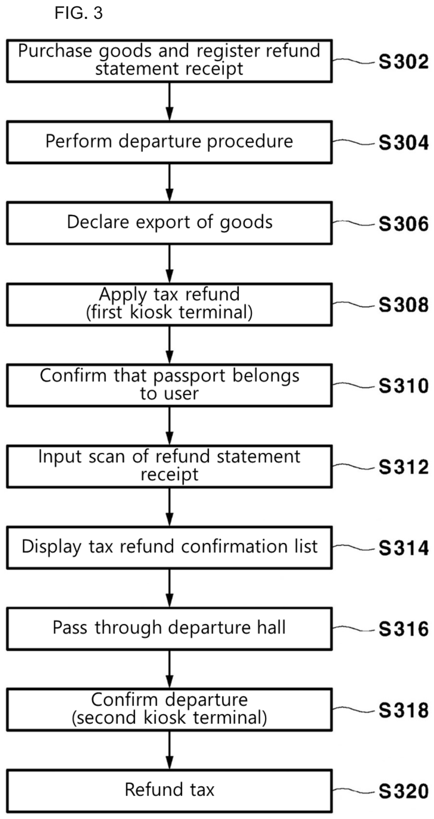

As shown in FIG. 3, the first kiosk terminal 100 includes a control unit 110, the display unit 120, a storage unit 130, the camera 140, speakers 150, a reader unit 160, and a communication unit 170.

The camera 140 is installed on an upper portion of a front surface of the first kiosk terminal 100 to capture a user (foreign tourist) during the tax refund procedure and transmit the captured image (including the mission photograph) to the control unit 110.

The display unit 120 is controlled by the control unit 110 while being disposed on the front surface of the first kiosk terminal 100 so as to display information necessary for the tax refund procedure such that the information may be visually confirmed, and when the control unit 110 determines that the age group of the foreign tourist is a child, the information necessary for the tax refund procedure is displayed on a lower portion of the display unit 120.

The speakers 150 are controlled by the control unit 110 while being disposed on both sides of the front surface of the first kiosk terminal 100 so as to output voice information necessary for the tax refund procedure such that the foreign tourist may hear the voice information, and when the control unit 110 determines that the age group of the foreign tourist is the elderly, the voice information necessary for the tax refund procedure is output larger than that of the general public and the youth.

That is, the control unit 110 causes a user interface (UI) screen corresponding to the age group of the foreign tourist to be displayed on the display unit 120 or causes the speaker 150 to output the voice information.

The reader unit 160 scans the barcode or the QR code displayed on the passport (including a mobile passport) 302 or the receipt 306 of the foreign tourist 300 to transmit the barcode or the QR code to the control unit 110, and the control unit 110 transmits information included in the passport, the barcode, or the QR code to the operation server 400 through the communication unit 170.

The storage unit 130 stores the first dedicated application 101 for performing the tax refund procedure of the first kiosk terminal 100 and various information necessary for the tax refund procedure.

The communication unit 170 may include all communication units capable of networking through wired and/or wireless networks, and is not limited to wired communication, wireless communication, 3G, 4G, or other methods.

Subsequently, when the foreign tourist 300 executes the second dedicated application 201 in the second kiosk terminal 200 installed on the air side in FIG. 2, the second kiosk terminal 200 first confirms the passport (including a mobile passport) and transmits the information included in the passport to the operation server 400 to request tax refund information (list) of the foreign tourist.

Upon confirmation of the passport (including a mobile passport), the second kiosk terminal 200 may compare a photograph on the passport with a photograph directly captured of the passport holder so as to determine whether a person in the photograph on the passport is the same as the passport holder.

That is, the second kiosk terminal 200 may include a camera for determining whether the person in the photograph on the passport is the same as the passport holder, capture an image while instructing the foreign tourist to take a specific pose or facial expression, and use the captured image (mission photograph).

For example, the second kiosk terminal 200 may instruct the foreign tourist to pose with the left hand placed against the face and making a V-sign with the fingers, and to capture the mission photograph with a smiling face, so that the second kiosk terminal 200 may determine whether the mission photograph corresponds to a photograph of the instructed pose, and determine whether a person in the mission photograph is the same as the passport holder.

In addition, an age group is identified by analyzing a face of the mission photograph that is directly captured or an age group is identified based on the date of birth recorded in the passport 302 to provide a screen suitable for the age group.

For example, when the age group is the elderly, a screen having relatively larger letters and images than a screen provided to the general public and the youth may be provided.

In addition, the second kiosk terminal 200 receives the tax refund information of the foreign tourist transmitted to the operation server 400 to display the tax refund information on the screen, and when the foreign tourist approves, the second kiosk terminal 200 notifies a result of departure of the foreign tourist to the refund business operator server 600 so that a refund amount may be paid to an account of the foreign tourist to refund the tax.

The operation server 400 is provided between the institution server 500 and the refund business operator server 600 and between the kiosk terminals 100 and 200 to perform the tax refund procedure.

When the foreign tourist 300 transmits information about the passport and the refund statement (receipt) for a tax refund on the purchased goods through the first kiosk terminal 100 after self-authentication, the operation server 400 requests confirmation of the tax refund for the purchased goods while transmitting the information to the refund business operator server 600, and requests the institution server 500 to confirm export of the purchased goods.

In addition, the operation server 400 confirms the export of the purchased goods from the institution server 500 to transmit the confirmation of the export to the first kiosk terminal 100, and receives the tax refund list for the purchased goods from the refund business operator server 600 to transmit the received tax refund list to the first kiosk terminal 100.

In addition, when the exported purchased goods are expensive items such as jewelry or luxury items, the operation server 400 may request an arrival hall operation server of a country where the foreign tourist wants to enter to confirm import of specific purchased goods from an arrival hall operation server.

The institution server 500 is, for example, a server operated by a national institution such as the Ministry of Justice or the Customs Service.

When the institution server 500 requests confirmation of the export of the purchased goods while transmitting the information about the passport and the refund statement (receipt) from the operation server 400, the institution server 500 confirms the request to provide the confirmation to the operation server 400.

When the refund business operator server 600 requests confirmation of the tax refund for the purchased goods while transmitting the information about the passport and the refund statement (receipt) from the operation server 400, the refund business operator server 600 confirms the tax refund list for the purchased goods to transmit the tax refund list to the operation server 400.

In addition, when the foreign tourist 300 transmits the passport information through the second kiosk terminal 200 after self-authentication, the operation server 400 requests the confirmation of the tax refund on the purchased goods while transmitting the information to the refund business operator server 600, and requests the institution server 500 to confirm the departure of the foreign tourist.

In addition, the operation server 400 confirms the departure of the foreign tourist from the institution server 500 to transmit the confirmation of the departure of the foreign tourist to the second kiosk terminal 200, and receives a result of the tax refund for the purchased goods from the refund business operator server 600 to transmit the result of the tax refund to the second kiosk terminal 200.

When the institution server 500 requests the departure of the foreign tourist while transmitting the passport information from the operation server 400, the institution server 500 confirms the request to provide the confirmation to the operation server 400.

When the refund business operator server 600 requests the tax refund for the purchased goods while transmitting the passport information from the operation server 400, the refund business operator server 600 transmits the tax refund information to the operation server 400, and when the departure of the foreign tourist is confirmed, the refund business operator server 600 processes the tax refund of the purchased goods (pays the refund amount to the account of the foreign tourist) and transmits the processing result to the operation server 400.

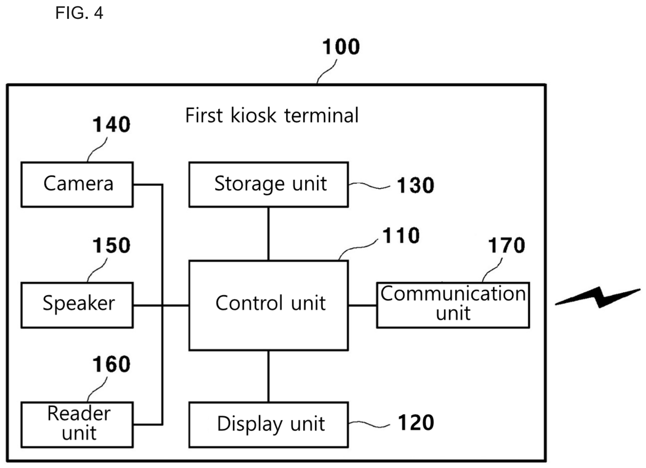

FIG. 4 is a block diagram of a foreigner departure system including a tax refund according to another embodiment of the present invention.

As shown in FIG. 4, the foreigner departure system including a tax refund according to another embodiment of the present invention includes kiosk terminals 100 and 200, a foreign tourist mobile terminal 300, an operation server 400, an institution server 500, a refund business operator server 600, and beacons 700 and 800, and a foreign tourist performs a tax refund procedure through the components.

A communication method between the components may include all communication methods in which objects may be networked through wired and/or wireless networks, and is not limited to wired communication, wireless communication, 3G, 4G, or other methods.

Herein, the "foreigner" means a person who holds the nationality of a country other than the country of stay and is not liable for taxes therein, a foreign tourist is given as a representative example, but the foreigner is not limited to such a case. The foreign tourist 300 has a general passport or the mobile terminal 300 having a mobile passport embedded therein, and a receipt (refund statement) for a refund received after purchasing goods.

In this case, the mobile terminal 300 is implemented in the form of a smartphone having a mobile passport embedded therein, may be any computing device that may be carried and used, such as another mobile communication terminal having a mobile passport embedded therein, a notebook computer, a personal digital assistant (PDA), a tablet computer, or the like, and may be equipped with a tax refund and authentication application (hereinafter referred to as a refund amount 308) to perform a tax refund procedure through communication with the operation server.

In this case, the mobile passport is obtained by capturing a real passport using a camera, extracting information therefrom, and converting the information into a QR code or encrypting image information, and is displayed on the mobile terminal 300.

The mobile passport may be converted and displayed on a screen of the foreign tourist mobile terminal 300 or may be output as a QR code for use.

When the foreign tourist purchases goods of a certain amount or more at a domestic tax refund store, the foreign tourist presents the mobile passport displayed on the mobile terminal 300 of the foreign tourist, and issues and registers a refund statement (receipt) together with the purchased goods.

The kiosk terminals 100 and 200 are installed on a land side and an air side of an airport, respectively, so that the foreign tourist may perform the tax refund procedure, and dedicated applications are installed for this purpose.

When the foreign tourist enters the air side through a departure gate, which is a boundary line in the land side, the foreign tourist may not return to the land side unless there are special circumstances.

In addition, a plurality of beacons 700a, 700b, ..., 800a, 800b, ... are installed between the land side and the air side at predetermined intervals.

The beacon is a device that transmits signals to nearby devices using a protocol as a wireless communication device, and low-power wireless communication is possible to reduce concerns about power consumption and cover up to 50 to 100 m.

In the present invention, the beacons 700a, 700b, ..., 800a, 800b, ... transmit information about a specific location (e.g., the land side and the air side) to the mobile terminal 300, and when the mobile terminal 300 receives the information about the specific location, the refund application 308 is automatically executed.

For example, the beacons 700a, 700b, ..., 800a, 800b, ... transmit beacon signals to all the mobile terminals 300 of foreign tourists entering a specific area, that is, an immigration specific area which may be called an overseas area where a tax refund may be performed in a place where departure is about to be performed, at an immigration office, and an application (refund application 308) that enables the foreigner departure system including a tax refund and receiving the transmitted signals to be operated is activated.

When the refund application 308 is activated, a tax refund target list, which corresponds to a credit card, a mobile payment, a prepaid card, a simple payment, or a coupon installed in each mobile terminal 300, is organized such that the tax refund may be settled, and in this case, when a limit of the tax refund is set to, for example, 300,000 won, and an amount of the tax refund target list is 420,000 won, if the amount of the tax refund target list exceeds the limit of the tax refund amount, all of the tax refund target lists are displayed on the mobile terminal 300, and in this case, the amount of the tax refund target list is adjusted in accordance with the limit of the tax refund amount by adding or deleting some lists to or from the tax refund target based on selection of the foreign tourist.

That is, the refund application 308 may be, for example, an application programmed to allow a user (foreign tourist) to select a function of adjusting the amount to be refunded in a manner of adding some lists to the tax refund target and deleting some lists from the tax refund target when the total amount of tax refund received is 300,000 won and the amount of the tax refund target list exceeds 300,000 won.

Obviously, when the beacon does not exist, the foreign tourist may enter the land side and the air side to execute the refund application 308 of the mobile terminal 300.

The kiosk terminals 100 and 200 are devices for implementing a tax refund procedure for foreign tourists who have a general passport or foreign tourists who do not use the authentication application 304 even if a mobile terminal having a mobile passport embedded therein is provided, and the kiosk terminals 100 and 200 are installed on the land side and the air side, respectively, which are specific places in the airport, to recognize the passport or receipt of the foreign tourist, request the departure system to export the purchased goods, thereby performing the same role as the authentication application 304 of the mobile terminal 300.

Therefore, a function of the mobile terminal 300 will be described first, and the kiosk terminals 100 and 200 will be described.

After the tax refund procedure is performed through the mobile terminal 300 of the land side, the foreign tourist leaves the country through a departure gate, enters the air side, and receives the tax refund through the mobile terminal 300.

As described above, the refund application 308 of the mobile terminal 300 performs mutually different tax refund procedures in mutually different zones (land side and air side).

More specifically, when the foreign tourist enters the land side and executes the refund application 308 or the refund application 308 is automatically executed through communication with the beacons 700a, 700b, ... installed on the land side, a mobile passport 1 is confirmed first, and a photograph on the mobile passport is compared with a photograph directly captured of a mobile terminal holder so as to determine whether a person in the photograph on the mobile passport is the same as the mobile terminal holder.

In this case, the camera provided in the mobile terminal 300 may capture an image while instructing the foreign tourist to take a specific pose or facial expression, and use the captured image (mission photograph).

For example, the mobile terminal 300 may instruct the foreign tourist to pose with the left hand placed against the face and making a V-sign with the fingers, and to capture the mission photograph with a smiling face, so that it is possible to determine whether the mission photograph corresponds to a photograph of a pose instructed by the mobile terminal 300 to determine whether the foreign tourist is the same as a person in the mission photograph.

In addition, an age group is identified by analyzing a face of the mission photograph that is directly captured or an age group is identified based on the date of birth recorded in the mobile passport to provide a screen suitable for the age group.

For example, when the age group is the elderly, a screen having relatively larger letters and images than a screen provided to the general public and the youth may be provided.

In addition, the mobile terminal 300 transmits the information included in the mobile passport 1 to the operation server 400, receives the tax refund list transmitted from the operation server 400, and displays the tax refund list on the screen.

The foreign tourist confirms whether there is any abnormality in a tax refund list displayed on the screen of the mobile terminal 300, and when there is no abnormality, the foreign tourist completes the tax refund procedure on the land side.

When the foreign tourist passes through a departure hall and enters the air side to execute the refund application 308 or the refund application 308 is automatically executed through communication with the beacons 800a, 800b, ... installed in the air side, the mobile passport 1 is confirmed first, and a photograph on the mobile passport is compared with a photograph directly captured of a mobile terminal holder so as to determine whether a person in the photograph on the mobile passport is the same as the mobile terminal holder.

In this case, the camera provided in the mobile terminal 300 may capture an image while instructing the foreign tourist to take a specific pose or facial expression, and use the captured image (mission photograph).

For example, the mobile terminal 300 may instruct the foreign tourist to pose with the left hand placed against the face and making a V-sign with the fingers, and to capture the mission photograph with a smiling face, so that it is possible to determine whether the mission photograph corresponds to a photograph of a pose instructed by the mobile terminal 300 to determine whether the foreign tourist is the same as a person in the mission photograph.

In addition, an age group is identified by analyzing a face of the mission photograph that is directly captured or an age group is identified based on the date of birth recorded in the mobile passport to provide a screen suitable for the age group.

For example, when the age group is the elderly, a screen having relatively larger letters and images than a screen provided to the general public and the youth may be provided.

In addition, the mobile terminal 300 receives the tax refund information of the foreign tourist transmitted to the operation server 400 to display the tax refund information on the screen, and when the foreign tourist approves, the operation server 400 notifies a result of the departure of the foreign tourist to the refund business operator server 600 so that a tax amount may be paid to an account of the foreign tourist to refund the tax.

The operation server 400 is provided between the institution server 500, the refund business operator server 600, and the mobile terminal 300 to perform the tax refund procedure.

When the foreign tourist transmits the information about the mobile passport through the mobile terminal 300 after self-authentication, the operation server 400 requests confirmation of the tax refund for the purchased goods in association with the mobile passport while transmitting the confirmation of the tax refund to the refund business operator server 600, and requests the institution server 500 to confirm the export of the purchased goods in association with the mobile passport or confirm the departure of the foreign tourist.

In addition, the operation server 400 confirms the export of the purchased goods in association with the mobile passport from the institution server 500 and transmits the confirmation of the export to the mobile terminal 300, and receives the tax refund list and information about the purchased goods in association with the mobile passport from the refund business operator server 600 to transmit the received tax refund list and information to the mobile terminal 300.

In addition, when the exported purchased goods are expensive items such as jewelry or luxury items, the operation server 400 may request an arrival hall operation server of a country where the foreign tourist wants to enter to confirm import of specific purchased goods.

The institution server 500 is, for example, a server operated by a national institution such as the Ministry of Justice or the Customs Service.

When the institution server 500 requests the confirmation of the export of the purchased goods in association with the mobile passport or the confirmation of the departure of the foreign tourist while transmitting information about the mobile passport from the operation server 400, the institution server 500 confirms the request and provides the confirmation to the operation server 400.

When the refund business operator server 600 requests the confirmation of the export of the purchased goods in association with the mobile passport or the confirmation of the departure of the foreign tourist while transmitting the information about the mobile passport from the operation server 400, the refund business operator server 600 confirms a tax refund list and information regarding the purchased goods in association with the mobile passport and transmits the confirmation to the operation server 400.

In addition, the refund business operator server 600 processes the tax refund of the purchased goods (pays the refund amount to the account of the foreign tourist) when the departure of the foreign tourist is confirmed, and transmits the processing result to the operation server 400.

Meanwhile, the first and second kiosk terminals 100 and 200 perform the same role as the mobile terminal 300, but the first kiosk terminal 100 scans the barcode or the QR code included in the refund statement receipt as well as the passport and transmits the information included in the barcode or the QR code together with the passport information from the operation server.

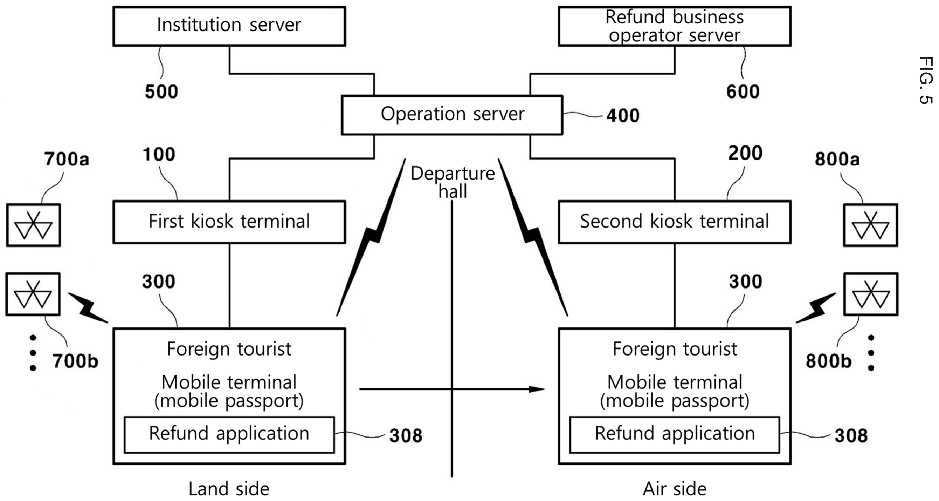

FIG. 5 is a flowchart of a foreigner departure method including a tax refund according to one embodiment of the present invention.

As shown in FIG. 5, in the foreigner departure method including a tax refund according to one embodiment of the present invention, first, when a foreign tourist purchases goods of a certain amount or more at a tax refund store in Korea, the foreign tourist presents a passport (including a mobile passport) and issues and registers a refund statement (receipt) together with the purchased goods (S302).

In addition, a departure procedure is performed upon departure within 3 months from the date of purchasing the goods (S304), and a procedure of reporting export of the purchased goods is performed (S306).

Next, the foreign tourist 300 executes the first dedicated application 101 of the first kiosk terminal 100 of the land side to apply for a tax refund for the purchased goods (S308).

The first kiosk terminal 100 confirms the passport (including a mobile passport) presented by the foreign tourist, and compares a photograph on the passport with a photograph directly captured of a passport holder so as to determine whether a person in the photograph on the passport is the same as the passport holder (S310).

In this case, it may be confirmed whether the person in the photograph on the passport is the same as the passport holder through a specific mission photograph.

When the passport holder is the person on the passport, the first kiosk terminal 100 scans and inputs the barcode or QR code included in the refund statement receipt presented by the foreign tourist (S312).

In this case, when the passport holder is not the person on the passport, step S310 may be repeated 2-3 times after outputting the warning screen, and when the self-authentication fails, step S312 is stopped without performing subsequent steps.

The first kiosk terminal 100 transmits the information about the passport and the refund statement (receipt) to the operation server 400, and the operation server 400 requests confirmation of the tax refund for the purchased goods while transmitting the information to the refund business operator server 600, and requests confirmation of the export of the purchased goods while transmitting the confirmation of the tax refund to the institution server 500.

In addition, the operation server 400 transmits a result of confirmation for the export of the purchased goods, which is transmitted from the institution server 500, and a tax refund list for the purchased goods, which is transmitted from the refund business operator server 600, to the first kiosk terminal 100.

The first kiosk terminal 100 displays the tax refund list on the display unit when the export of the purchased goods is confirmed (S314), and when the foreign tourist confirms and approves, the tax refund procedure through the first kiosk terminal is completed.

In this case, when the export of the purchased goods is not confirmed, step S312 may be repeated 2-3 times after outputting the warning screen, and when the self-authentication fails, step S314 is stopped without performing subsequent steps.

Next, the foreign tourist enters the air side through the departure gate and passes through the departure hall (S316), and executes the second dedicated application 201 of the second kiosk terminal 200 on the air side to confirm the departure of the foreign tourist (S318).

More specifically, when the passport information is transmitted through the second kiosk terminal 200 after self-authentication, the operation server 400 requests confirmation of the tax refund for the purchased goods while transmitting the information to the refund business operator server 600, and requests the institution server 500 to confirm the departure of the foreign tourist.

In addition, the operation server 400 transmits a result of confirmation of the departure of the foreign tourist, which is transmitted from the institution server 500, and tax refund information about the purchased goods, which is transmitted from the refund business operator server 600, to the second kiosk terminal 200.

In this case, in a case where it is determined that exported purchased goods are expensive items or luxury items when the departure of the foreign tourist is confirmed, the operation server 400 may request an arrival hall operation server of a country where the foreign tourist wants to enter to confirm import of specific purchased goods.

The second kiosk terminal 200 displays the tax refund information on the display unit so that when the foreign tourist confirms the tax refund information and approves, the operation server 400 transmits the confirmation to the refund business operator server 600 when the departure of the foreign tourist is confirmed, and the refund business operator server 600 processes the tax refund of the purchased goods (pays the refund amount to the account of the foreign tourist) and transmits the processing result to the second kiosk terminal 200 through the operation server 400 to display the processing result on the display unit (S320).

In this case, when the departure of the foreign tourist is not confirmed, the confirmation is transmitted to the refund business operator server 600 and the refund amount is not paid to the account of the foreign tourist, so that the tax is not refunded.

As described above, according to one embodiment of the present invention, the first kiosk terminal 100 and the second kiosk terminal 200 are provided on the land side and the air side, respectively, so that the tax refund procedure is performed through the first kiosk terminal 100 of the land side and the actual refund amount is received through the second kiosk terminal 200 of the air side after the foreigner passes through the departure hall, thereby reducing a time and manpower required for the tax refund procedure upon the departure of the foreigner.

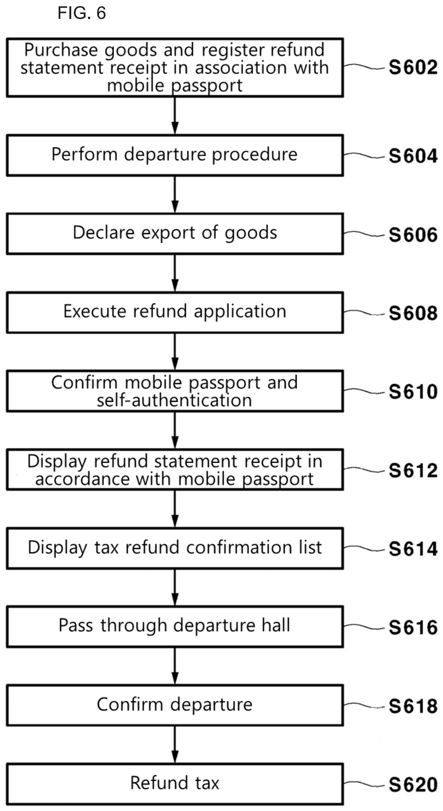

FIG. 6 is a flowchart of a foreigner departure method including a tax refund according to another embodiment of the present invention.

As shown in FIG. 6, in the foreigner departure method including a tax refund according to another embodiment of the present invention, first, when a foreign tourist purchases goods of a certain amount or more at a tax refund store in Korea, the foreign tourist presents a mobile passport 1 and issues and registers a refund statement (receipt) of the purchased goods in association with the mobile passport (S602).

In addition, a departure procedure is performed upon departure within 3 months from the date of purchasing the goods (S604), and a procedure of reporting export of the purchased goods is performed (S606).

Next, the foreign tourist enters the land side and executes the refund application 308 of the mobile terminal 300 to apply for the tax refund for the purchased goods (S608).

Alternatively, when the foreign tourist enters the land side, the mobile terminal 300 automatically executes payment of the refund amount through communication with the beacons 700a, 700b, ..., and requests the tax refund for the purchased goods.

The mobile terminal 300 confirms the mobile passport presented by the foreign tourist and compares a photograph on the mobile passport with a photograph directly captured of a mobile terminal holder so as to determine whether a person in the photograph on the mobile passport is the same as the mobile terminal holder (S610).

In this case, it may be confirmed whether the person in the photograph on the mobile passport is the same as the mobile terminal holder through a specific mission photograph.

When the mobile terminal holder is the person on the mobile passport, the mobile passport information is transmitted to the operation server 400, and the operation server 400 requests confirmation of the tax refund for the purchased goods in association with the mobile passport while transmitting the mobile passport information to the refund business operator server 600, and requests confirmation of the export of the purchased goods in association with the mobile passport while transmitting the confirmation of the tax refund for the purchased goods to the institution server 500.

In addition, the operation server 400 transmits a result of the confirmation for the export of the purchased goods in association with the mobile passport, which is transmitted from the institution server 500, and a tax refund list for the purchased goods in association with the mobile passport, which is transmitted from the refund business operator server 600, to the mobile terminal (S612).

Accordingly, the mobile terminal 300 displays the tax refund list on the display unit when the export of the purchased goods is confirmed (S614), and when the foreign tourist confirms and approves, the tax refund procedure at the land side is completed.

In step S610, when the mobile terminal holder is not the person on the mobile passport, step S610 may be repeated 2-3 times after outputting the warning screen, and when the authentication fails, the step is stopped without performing subsequent steps.

In step S614, when the export of the purchased goods in association with the mobile passport is not confirmed, step S612 may be repeated 2-3 times after outputting the warning screen, and when the self-authentication fails, step S614 is stopped without performing subsequent steps.

Next, the foreign tourist passes through the departure gate from the land side to enter the air side (S616), and executes the refund application 308 of the mobile terminal 300 to confirm the departure of the foreign tourist (S618).

Alternatively, when the foreign tourist enters the air side, the refund amount of the mobile terminal 300 is automatically paid through communication with the beacons 800a, 800b, ..., to confirm the departure of the foreign tourist (S618).

More specifically, when the mobile passport information is transmitted through the mobile terminal 300 after self-authentication, the operation server 400 requests the tax refund for the purchased goods in association with the mobile passport while transmitting the mobile passport information to the refund business operator server 600, and requests the institution server 500 to confirm the departure of the foreign tourist.

In addition, the operation server 400 transmits a result of the confirmation of the departure of the foreign tourist, which is transmitted from the institution server 500, and tax refund information about the purchased goods in association with the mobile passport, which is transmitted from the refund business operator server 600, to the mobile terminal 300.

In this case, in a case where it is determined that exported purchased goods in accordance with the mobile passport are expensive items or luxury items when the departure of the foreign tourist is confirmed, the operation server 400 may request an arrival hall operation server of a country where the foreign tourist wants to enter to confirm import of specific purchased goods.

The mobile terminal 300 displays the tax refund information on the screen so that when the foreign tourist confirms the tax refund information and approves, the operation server 400 transmits the confirmation to the refund business operator server 600 when the departure of the foreign tourist is confirmed, and the refund business operator server 600 processes the tax refund of the purchased goods (pays the refund amount to the account of the foreign tourist) and transmits the processing result to the mobile terminal 300 through the operation server 400 to display the processing result on the display unit (S620).

In this case, when the departure of the foreign tourist is not confirmed, the confirmation is transmitted to the refund business operator server 600 and the refund amount is not paid to the account of the foreign tourist, so that the tax is not refunded.

As described above, according to another embodiment of the present invention, when the foreign tourist is located in the land side or the air side, the refund application 308 of the mobile terminal 300 is manually or automatically executed, so that the tax refund procedure may performed in the land side and the actual refund amount may be paid in the air side passing through the departure hall, and by performing such roles separately, it is possible to simplify the tax refund procedure upon departure of the foreigner and reduce the time or manpower required therefor.

## Claims

1. A foreigner departure system including a tax refund, the foreigner departure system comprising:
a first kiosk terminal installed on a land side of an airport to authenticate a passport, and configured to scan a refund statement receipt of a foreign tourist to perform a tax refund procedure for purchased goods;
a second kiosk terminal installed on an air side of the airport to authenticate the passport, and configured to output tax refund information according to a result of the tax refund procedure;
an operation server configured to receive passport information or the refund statement receipt from the first and second kiosk terminals to request confirmation of departure of the foreign tourist or export of the purchased goods while transmitting the passport information or refund statement receipt to an institution server, transmit a result of the confirmation to the first and second kiosk terminals, request the tax refund information while transmitting the passport information or the refund statement receipt to a refund business operator server, and transmit a result of the request to the first and second kiosk terminals;
the institution server configured to confirm the departure of the foreign tourist or the export of the purchased goods in response to the request of the operation server, and transmit a result of the confirmation to the operation server; and
the refund business operator server configured to confirm the tax refund information in response to the request of the operation server to transmit the tax refund information to the operation server, and pay a refund amount to an account of the foreign tourist when the departure of the foreign tourist is confirmed.

2. The foreigner departure system of claim 1, wherein the first kiosk terminal or the second kiosk terminal compares a photograph on a passport with a photograph directly captured of a passport holder so as to determine whether a person in the photograph on the passport is the same as the passport holder (the same person), and
an image is captured while instructing the foreign tourist to take a specific pose or facial expression, and it is determined whether the foreign tourist is the same as the passport holder by using the captured image (mission photograph).

3. The foreigner departure system of claim 1, wherein the first kiosk terminal scans a barcode or a QR code of the refund statement receipt to transmit information included in the barcode or the QR code to the operation server.

4. A foreigner departure system including a tax refund, the foreigner departure system comprising:
a mobile terminal held by a foreign tourist, in which the mobile terminal has a mobile passport embedded therein, executes a refund and authentication application ("refund application") to perform a tax refund procedure for purchased goods in association with the mobile passport when the mobile terminal is located on a land side of an airport, and executes the refund application to output tax refund information according to a result of the tax refund procedure when the mobile terminal is located on an air side;
an operation server configured to receive mobile passport information from the mobile terminal to request confirmation of departure of the foreign tourist or export of the purchased goods in association with the mobile passport while transmitting the mobile passport information to an institution server, transmit a result of the confirmation to the mobile terminal, request the tax refund information while transmitting the passport information or the refund statement receipt to a refund business operator server, and transmit a result of the request to the mobile terminal;
the institution server configured to confirm the departure of the foreign tourist or the export of the purchased goods in association with the mobile passport in response to the request of the operation server, and transmit a result of the confirmation to the operation server; and
the refund business operator server configured to confirm the tax refund information in response to the request of the operation server to transmit the tax refund information to the operation server, and pay a refund amount to an account of the foreign tourist when the departure of the foreign tourist is confirmed.

5. The foreigner departure system of claim 4, further comprising a beacon provided on each of the land side and the air side to automatically execute the refund application of the mobile terminal by transmitting location information to the mobile terminal.

6. The foreigner departure system of claim 5, wherein, when the refund application is activated, a tax refund target list is organized and output to the mobile terminal, and when an amount of the tax refund target list exceeds a limit of a tax refund amount, the amount of the tax refund target list is adjusted in accordance with the limit of the tax refund amount by adding or deleting lists to or from the tax refund target based on selection of the foreign tourist.

7. The foreigner departure system of claim 4 or 5, wherein the mobile terminal compares a photograph on the mobile passport with a photograph directly captured of a mobile terminal holder so as to determine whether a person in the photograph on the mobile passport is the same as mobile terminal holder (the same person), and
an image is captured while instructing the foreign tourist to take a specific pose or facial expression, and it is determined whether the foreign tourist is the same as the mobile terminal holder by using the captured image (mission photograph).

8. The foreigner departure system of claim 1 or 4, wherein, in a case where it is determined that exported purchased goods are expensive items or luxury items when the departure of the foreign tourist is confirmed, the operation server requests an arrival hall operation server of a country where the foreign tourist wants to enter to confirm import of specific purchased goods.

9. A foreigner departure method including a tax refund, the foreigner departure method comprising:
(A) starting a tax refund procedure for purchased goods of a foreign tourist by using a first kiosk terminal installed on a land side of an airport upon departure of the foreign tourist;
(B) confirming a passport (including a mobile passport) of the foreign tourist and scanning a barcode or a QR code included in a refund statement receipt, by the first kiosk terminal;
(C) when information about the passport and a refund statement (receipt) is transmitted from the first kiosk terminal to the operation server, transmitting the information to a refund business operator server to request confirmation of the tax refund for the purchased goods, and transmitting the information to an institution server to request confirmation of export of the purchased goods, by the operation server;
(D) transmitting a result of the confirmation for the export of the purchased goods, which is transmitted by the institution server, and a tax refund list for the purchased goods, which is transmitted by the refund business operator server, to the first kiosk terminal, by the operation server;
(E) displaying the tax refund list on a display unit when the export of the purchased goods is confirmed by the first kiosk terminal;
(F) confirming the passport of the foreign tourist by using a second kiosk terminal installed on an air side of the airport after the foreign tourist passes through a departure hall;
(G) when the passport information is transmitted from the second kiosk terminal to the operation server, transmitting the passport information from the operation server to the refund business operator server to request the tax refund for the purchased goods, and transmitting the passport information to the institution server to request confirmation of the departure of the foreign tourist;
(H) transmitting a result of the confirmation of the departure of the foreign tourist, which is transmitted by the institution server, and the tax refund information about the purchased goods, which is transmitted by the refund business operator server, from the operation server to the second kiosk terminal;
(I) displaying the tax refund information on a display unit by the second kiosk terminal; and
(J) when the departure of the foreign tourist is confirmed, transmitting the confirmation of the departure from the operation server to the refund business operator server, and paying a refund amount to an account of the foreign tourist by the refund business operator server.

10. The foreigner departure method of claim 9, wherein in step (B), the first kiosk terminal compares a photograph on a passport with a photograph directly captured of a passport holder so as to determine whether a person in the photograph on the passport is the same as the passport holder (the same person), and
an image is captured while instructing the foreign tourist to take a specific pose or facial expression, and it is determined whether the foreign tourist is the same as the passport holder by using the captured image (mission photograph), so that when the foreign tourist is the same as the passport holder, step (C) is performed.

11. A foreigner departure method including a tax refund, the foreigner departure method comprising:
(A') transmitting mobile passport information to an operation server by executing a refund and authentication application (refund application) of a mobile terminal having a mobile passport embedded therein when the foreign tourist enters a land side of an airport for departure;
(B') transmitting the mobile passport information from the operation server to a refund business operator server to request confirmation of the tax refund for purchased goods in association with the mobile passport, and transmitting the mobile passport information to an institution server to request confirmation of export of the purchased goods;
(C') transmitting a result of the confirmation for the export of the purchased goods in association with the mobile passport, which is transmitted by the institution server, and a tax refund list for the purchased goods in association with the mobile passport, which is transmitted by the refund business operator server, from the operation server to the mobile terminal;
(D') displaying the tax refund list on a screen when the export of the purchased goods in association with the mobile passport is confirmed by the mobile terminal;
(E') transmitting the mobile passport information to the operation server by executing the refund application of the mobile terminal having the mobile passport embedded therein when the foreign tourist enters an air side of the airport after passing through a departure hall;
(F') transmitting the mobile passport information from the operation server to the refund business operator server to request the tax refund for the purchased goods in association with the mobile passport, and transmitting the mobile passport information to the institution server to request confirmation of departure of the foreign tourist;
(G') transmitting a result of the confirmation of the departure of the foreign tourist, which is transmitted by the institution server, and tax refund information about the purchased goods in association with the mobile passport, which is transmitted by the refund business operator server, from the operation server to the mobile terminal;
(H') displaying the tax refund information on the screen by the mobile terminal; and
(I') when the departure of the foreign tourist is confirmed, transmitting the confirmation of the departure from the operation server to the refund business operator server, and paying a refund amount to an account of the foreign tourist by the refund business operator server.

12. The foreigner departure method of claim 11, wherein, in step (A'), the mobile terminal compares a photograph on the mobile passport with a photograph of a mobile terminal holder, which is directly captured, so as to determine whether a person in the photograph on the mobile passport is the same as mobile terminal holder (the same person), and
an image is captured while instructing the foreign tourist to take a specific pose or facial expression, and it is determined whether the foreign tourist is the same as the mobile terminal holder by using the captured image (mission photograph), so that when the foreign tourist is the same as the passport holder, step (B') is performed.

13. The foreigner departure method of claim 11, wherein, in step (A') or (E'), the refund application of the mobile terminal is automatically executed by transmitting location information to the mobile terminal using a beacon installed in the land side or the air side.

14. The foreigner departure method of claim 13, wherein, when the refund application is activated, a tax refund target list is organized and output to the mobile terminal, and when an amount of the tax refund target list exceeds a limit of an tax refund amount, the amount of the tax refund target list is adjusted in accordance with the limit of the tax refund amount by adding or deleting lists to or from the tax refund target based on selection of the foreign tourist.

15. The foreigner departure method of claim 9 or 11, wherein, in a case where it is determined that exported purchased goods are expensive items or luxury items when the departure of the foreign tourist is confirmed, the operation server requests an arrival hall operation server of a country where the foreign tourist wants to enter to confirm import of specific purchased goods.
